(19) Europäisches Patentamt
European Patent Office
Office européen des brevets

(11) Veröffentlichungsnummer: **0 259 249**
**A2**

(12) # EUROPÄISCHE PATENTANMELDUNG

(21) Anmeldenummer: **87810404.1**

(22) Anmeldetag: **17.07.87**

(51) Int. Cl.$^4$: **A 01 N 25/02**
A 01 N 25/04

(30) Priorität: **23.07.86 CH 2937/86**
**14.10.86 CH 4103/86**

(43) Veröffentlichungstag der Anmeldung:
**09.03.88 Patentblatt 88/10**

(84) Benannte Vertragsstaaten:
**AT BE CH DE ES FR GB IT LI LU NL SE**

(71) Anmelder: **CIBA-GEIGY AG**
**Klybeckstrasse 141**
**CH-4002 Basel (CH)**

(72) Erfinder: **Moldovanyi, Laszlo, Dr.**
**Austrasse 78**
**CH-4051 Basel (CH)**

**Cox, Ashley Robert**
**Maulbeerstrasse 65**
**CH-4058 Basel (CH)**

**Gati, Sandor, Dr.**
**Ochsengasse 48**
**CH-4123 Allschwill (CH)**

**Kleiber, Karl**
**Mattweg 100**
**CH-4144 Arlesheim (CH)**

(54) **Mikrobizide Zubereitung.**

(57) Es werden mikrobizide Zubereitungen und deren Verwendung zur Haut-und Händedesinfektion beschrieben. Die Zubereitungen enthalten neben der mikrobiziden Wirksubstanz Aryl- oder Aryloxyalkanole, anionische, zwitterionische und amphotere sowie gegebenenfalls nichtionogene Tenside, zweiwertige Alkohole, Fettsäuren und löslichkeitsverbessernde Additive.

EP 0 259 249 A2

**Beschreibung**

Mikrobizide Zubereitung

Die vorliegende Erfindung betrifft eine mikrobizide Zubereitung sowie deren Verwendung zur Haut- und Händedesinfektion sowie zur Desinfektion harter Oberflächen.

Bekannte Händedesinfektionsmittel, die als mikrobizide Wirksubstanz beispielsweise Hexachlorophen, p-Chlor-o-benzylphenol, o-Phenyl-phenol, p-Chlor-m-xylenol, 2,4-Dichlorbenzylalkohol, Polyvinylpyrrolidoniod-Komplex, Betaine, quaternäre Ammoniumverbindungen, Chlorhexidinsalze, Zinkpyridinthion usw. enthalten, weisen im allgemeinen entweder eine höhere erforderliche Wirkstoffkonzentration und/oder ein schmäleres Wirkungsspektrum und/oder eine ungünstige Hautverträglichkeit und/oder schwächere Hautaffinität auf.

Gemäss Ullmann 10, 31 liegt der durchschnittliche pH-Wert der normalen Haut bei 5,2 derjenige der Haut der Hände bei 4,5. Beim Waschen steigt der pH-Wert, je nach Waschmittel, mehr oder weniger ausgeprägt an. Wie H. Tonnier, G. Schuster und H. Modde in Arch. klin. exptl. Derm. 221, 232 (1965) berichten, wird heute unter Berücksichtigung der raschen Wiederherstellung der normalen Haut-pH-Werte eine gewisse Alkalität in Kauf genommen, wenn dafür die Austrocknung eingeschränkt wird. Dies dürfte aber für normale Haut und für Waschmittel gelten, die 2-3 Mal pro Tag angewendet werden, da die Alkalität zu Mazerationsvorgängen führt, die verstärkt das Bakterienwachstum fördern, weil die meisten pathogenen Keime ein alkalisches Milieu bevorzugen [vgl. E. Keining, Aerztliche Praxis, 21, Nr. 103, 5788-5794 (1969)].

Noch ungünstiger sind die Auswirkungen bei Seifen oder Syndets enthaltenden Hautreinigungsmitteln mit desinfizierenden Zusätzen, die bis zu 20-50 Mal täglich angewendet werden können. Diese Auswirkungen treten noch verstärkt auf wenn die Reinigungsmittel Alkohole, wie z.B. Ethylalkohol, n-Propylalkohol oder Isopropylalkohol oder deren Gemische enthalten, da dadurch die Neutralisationszeiten wesentlich verlängert werden [vgl. W. Schneider, Therapiewoche, 16, 675-679 (1968)].

In vielen Fällen war es nicht ohne weiteres möglich halogenierte Hydroxydiphenylether enthaltende flüssige mikrobizide Mittel mit einem hautfreundlichen pH-Wert unter 7 herzustellen, ohne dass die Wirksubstanz unter gleichzeitiger Beeinträchtigung der Aktivität ausscheidete. Um den Wirkstoff in Lösung zu halten war deshalb nötig entweder grosse Mengen eines ein- oder zweiwertigen Alkanols wie Ethyl-, n-Propyl-, Isopropylalkohol oder Propylenglykol, oder signifikant höhere Tensidkonzentrationen oder teure amphotere Tenside oder Betaine zu verwenden.

Es hat sich ausserdem auch gezeigt, dass beispielsweise halogenierte Hydroxydiphenylether enthaltende Hautreinigungsmittel, bzw. -desinfektionsmittel, welche bei pH-Werten von 7,2-7,8 gegen grampositive und gramnegative Bakterien wirksam sind, bei einem pH-Wert von 5,5 zumindest gegen einige gramnegative Keime wie z.B. Escherichia coli oder Pseudomonas aeruginosa unwirksam werden.

Es wurden nun mikrobizide Zubereitungen gefunden, die zur Haut- und Händedesinfektion verwendet werden können und die die aufgeführten Nachteile nicht aufweisen und einen hautfreundlichen pH-Wert von 5,0-5,5 besitzen.

Die Erfindung betrifft daher eine mikrobizide Zubereitung die dadurch gekennzeichnet ist, dass sie a) 0,1-2,5 Gew.-% einer mikrobiziden Wirksubstanz,

b) 0 - 10 Gew.-% eines Aryl- oder Aryloxy-$C_2$-$C_4$-alkanols,
c) 0 - 20 Gew.-% eines anionischen Tensides,
d) 0 - 10 Gew.-% eines zwitterionischen und amphoteren Tensides,
e) 0 - 3 Gew.-% eines nichtionogenen Tensides,
f) 0 - 15 Gew.-% eines zweiwertigen Alkohols,
g) 0 - 10 Gew.-% einer $C_8$-$C_{12}$-Fettsäure,
h) 1 - 25 Gew.-% löslichkeitsverbessernder Additive
i) 4,5-98,9 Gew.-% deionisiertes Wasser

enthält.

Die mikrobiziden Zubereitungen gemäss der Erfindung können einen pH-Wert von 3,0-9,0 aufweisen und zusätzlich übliche Verdickungs-und Trübungsmittel enthalten.

Die erfindungsgemässen mikrobiziden Zubereitungen können gegen grampositive und gramnegative Bakterien sowie andere Organismen wie Hefen, Pilze, Viren und Algen verwendet werden.

Ein weiterer Gegenstand der Erfindung ist die Verwendung einer solchen Zubereitung zur Haut- und Händedesinfektion sowie zur Desinfektion fester Oberflächen.

Als Komponente a) können folgende mikrobizide Wirkstoffe eingesetzt werden:

(A) Verbindungen der allgemeinen Formel

(1)

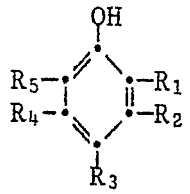

worin
$R_1$ Wasserstoff, Hydroxy, $C_{1-4}$-Alkyl, Chlor, Nitro, Phenyl oder Benzyl,
$R_2$ Wasserstoff, Hydroxy, $C_1$-$C_6$-Alkyl oder Chlor,
$R_3$ Wasserstoff, $C_1$-$C_6$-Alkyl, Hydroxy, Chlor, Nitro oder eine Sulfogruppe in Form ihrer Alkalimetall- oder Ammoniumsalze
$R_4$ Wasserstoff oder Methyl und
$R_5$ Wasserstoff oder Nitro
bedeuten.
Solche Verbindungen sind z.B. Phenol, Chlorphenol (o-, m-, p-), 2,4-Dichlorphenol, p-Nitrophenol, Pikrinsäure, Xylenol, p-Chlor-m-xylenol, Kresole (o-, m-, p-), p-Chlor-m-kresol, Brenzkatechin, Resorcin, Orcin, 4-n-Hexylresorcin, Pyrogallol, Phloroglucin, Carvacrol, Thymol, p-Chlorthymol, o-Phenylphenol, o-Benzylphenol, p-Chlor-o-benzylphenol und 4-Phenolsulfonsäure,

(B) Verbindungen der allgemeinen Formel

(2)

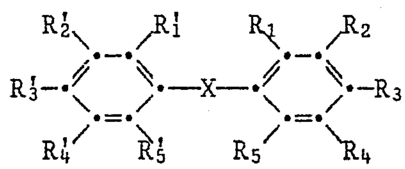

worin
X Schwefel oder die Methylengruppe,
R und $R_1'$, Hydroxy und
$R_2$, $R_2'$, $R_3$, $R_3'$, $R_4$, $R_4'$, $R_5$ und $R_5'$ unabhängig voneinander Wasserstoff oder Chlor bedeuten.
Verbindungen dieser Formel sind z.B. Hexachlorophen, Tetrachlorophen, Dichlorophen, 2,3-Dihydroxy-5,5'-dichlordiphenylsulfid, 2,2'-Dihydroxy-3,3',5,5'-tetrachlordiphenylsulfid, 2,2'-Dihydroxy-3,3',5,5',6,6'-hexachlordiphenylsulfid und 3,3'-Dibrom-5,5'-dichlor-2,2'-dihydroxydiphenylmethan,

(C) Verbindungen der allgemeinen Formel

(3)

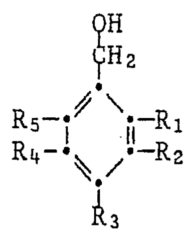

worin
$R_1$, $R_2$, $R_3$, $R_4$ und $R_5$ unabhängig voneinander Wasserstoff oder Chlor bedeuten.
Verbindungen dieser Formel sind z.B. Benzylalkohol, 2,4-, 3,5- oder 2,6-Dichlorbenzylalkohol und Trichlorbenzylalkohol,

(D) Chlorhexidin und seine Salze mit organischen und anorganischen Säuren,

(E) $C_{12}$-$C_{14}$-Alkylbetaine und $C_8$-$C_{18}$-Fettsäureamidoalkylbetaine wie das Kokosfettsäureamidopropylbetain,

(F) Amphotere Tenside wie z.B. $C_{12}$-$C_{18}$-Alkylamino-, $C_1$-$C_3$-Alkancarbonsäuren z.B. Alkylaminoessigsäuren oder Alkylaminopropionsäuren,

(F) Zinkpyridinthion und

(H) vorzugsweise Hydroxydiphenylether der Formel

(4) 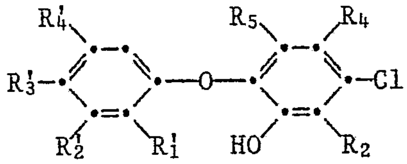

worin $R_1'$ Wasserstoff oder Hydroxy und $R_2$, $R_2'$, $R_3'$, $R_4$, $R_4'$ und $R_5$ unabhängig voneinander Wasserstoff oder Chlor und vorzugsweise worin $R_2'$ und $R_3'$ Chlor und $R_2$, $R_4$, $R_4'$ und $R_5$ Wasserstoff bedeuten. Besonders bevorzugt als Verbindung der Formel (4) ist der 2,4,4'-Trichlor-2'-hydroxydiphenylether.

Die mikrobiziden Wirkstoffe können einzeln oder in Mischung unter sich, d.h. von der gleichen oder von verschiedenen Klassen verwendet werden. Das gleiche gilt auch für die Komponenten c), d) und e).

Als Komponente b) sind Aryl- oder Aryloxy-$C_2$-$C_4$-alkanole mit vorzugsweise einem unsubstituierten Arylrest und einem geradkettigen Alkylenrest zu erwähnen. Bevorzugt wird das 2-Phenylethanol und Phenoxyethanol, 3-Phenoxypropanol und 4-Phenoxy-butanol. Das 2-Phenoxyethanol ist besonders bevorzugt.

Als Komponente c) des erfindungsgemässen Mittel kommen in Betracht Sarkosinate, sulfatierte Tenside, z.B. Alkylsulfate, Alkylethersulfate, Alkylamidsulfate, Alkylamidethersulfate, Alkylarylpolyethersulfate oder Monoglyceridsulfate, Sulfonate, z.B. Alkylsulfonate, Alkylamidsulfonate, Alkylarylsulfonate, α-Olefinsulfonate oder Sulfobernsteinsäurederivate, z.B. Alkylsulfosuccinate, Alkylethersulfosuccinate, oder Alkylsulfosuccinamidderivate, weiter auch Fettsäuremethyltauride, Alkylisethionate, Fettsäurepolypeptid-Kondensationsprodukte und Fettalkoholphosphorsäureester. Die in diesen Verbindungen vorkommenden Alkylradikale weisen vorzugsweise 8 bis 24 C-Atome auf.

Diese anionischen Tenside werden im allgemeinen in Form ihrer wasserlöslichen Salze, wie der Alkalimetall-, insbesondere Natrium -oder Kalium- oder Amin

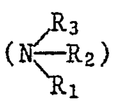

-salze verwendet, wobei $R_1$, $R_2$ und $R_3$ unabhängig voneinander Wasserstoff, $C_1$-$C_4$-Alkyl oder $C_1$-$C_4$-Hydroxyalkyl bedeuten. Bevorzugt sind $C_8$-$C_{24}$-Alkylsulfate in Form deren $C_1$-$C_4$-Alkanolaminsalze besonders das Monoethanolamin-laurylsulfat.

Als zwitterionische und amphotere Tenside für die Komponente d) kommen in Betracht $C_8$-$C_{18}$-Betaine, $C_8$-$C_{18}$-Sulfobetaine, $C_8$-$C_{24}$-Alkylamido-$C_1$-$C_4$-alkylenbetaine, Imidazolincarboxylate und N-Alkyl- β-amino- oder iminopropionate, wobei die $C_{10}$-$C_{20}$-Alkylamido-$C_1$-$C_4$-alkylenbetaine und besonders das Kokosfettsäureamidopropylbetain bevorzugt sind.

Als Komponente e) einsetzbare nicht-ionogene Tenside sind z.B. Polypropylenglykolethoxylate mit einem Molekulargewicht von 1000 bis 15000, Fettsäureglykolpartialester, z.B. Diethylenglykolmonostearat, Fettsäurealkanolamide und -dialkanolamide, Fettsäurealkylolamidethoxilate und Fettaminoxide. Bevorzugt sind die Fettsäurealkanolamide und -dialkanolamide und besonders das Kokosfettsäurediethanolamid.

Als Komponente f) kommen zweiwertige Alkohole in Betracht, besonders solche mit 2 bis 6 C-Atomen im Alkylenteil wie Ethylenglykol, 1,2-oder 1,3-Propandiol, 1,3-, 1,4- ode 2,3-Butandiol, 1,5-Pentandiol und 1,6-Hexandiol. Bevorzugt ist das 1,2-Propandiol (Propylenglykol). Sie können einzeln oder in Mischung unter sich verwendet werden.

Als Komponente g) sind gesättigte und ungesättigte $C_2$-$C_{12}$-Fettsäuren zu erwähnen, wie die Essig-, Propion-, Butter-, Isovalerian-, Capron-, Capryl-, Caprin-, Undecylen- und Laurinsäure bevorzugt sind die Caprinsäure und die Undecylensäure.

Als Komponente h) kommen folgende Verbindungen in Betracht:

- Sulfonate von Terpenoiden oder ein- oder zweikernigen aromatischen Verbindungen, z.B. die Sulfonate des Camphers, Toluols, Xylols, Cumols und Naphthols. Diese Sulfonate sind in Form ihrer wasserlöslichen Salze, wie der Alkalimetall-, insbesondere Natrium- oder Kaliumsalze oder der Amine ($NR_1R_2R_3$)-salze, wobei $R_1$, $R_2$ und $R_3$ unabhängig voneinander Wasserstoff, $C_1$-$C_8$-Alkyl, $C_2$-$C_8$-Alkenyl, $C_1$-$C_8$-Hydroxyalkyl, $C_5$-$C_8$-Cycloalkyl oder Polyalkylenoxi-$C_1$-$C_{18}$-alkyl oder $R_1$, $R_2$ und $R_3$ zusammen mit dem Stickstoffatom an dem sie gebunden sind Morpholino oder durch $C_1$-$C_4$-Alkyl substituiertes Morpholino bedeuten;
- Aliphatische gesättigte oder ungesättigte $C_{14}$-$C_{20}$-Monocarbonsäuren, wie die Myristin-, Palmitin-, Stearin-, Arakin-, Decyclen-, Dodecylen-, Palmitolein-, Oel-, Ricinol-, Linol-, Linolen-, Eläostearin-, Arachidon-, und 5-Eicosensäure;
- Gesättigte oder ungesättigte $C_3$-$C_{12}$-Di- oder Polycarbonsäuren, z.B. die Malon-, Bernstein-, Glutar-, Adipin-, Pimelin-, Kork-, Azelain- und Sebacinsäure, die Undecan- und Dodecandicarbonsäure, die Fumar-, Malein-, Wein- und Apfelsäure sowie die Citronen- und Aconitsäure;
- Aminocarbonsäuren, wie Ethylen-diamintetraessigsäure, Hydroxyethylethylendiamintetraessigsäure und

Nitrilotriessigsäure;
- Cycloaliphatische Carbonsäuren wie Camphersäure;
- Aromatische Carbonsäuren, wie die Benzol-, Phenylessig-, Phenoxyessig- und die Zimtsäure, die Salicylsäure, die 3-Hydroxy-und 4-Hydroxybenzoesäure, die Anissäure, sowie die o-, m- und p-Chlorphenylessigsäure sowie die o-, m- und p-Chlorphenoxyessigsäure;
- Alkalimetall- und Aminsalze anorganischer Säuren, wie die Natrium-, Kalium- und Amin($NR_1R_2R_3$)-salze der Salzsäure, Schwefelsäure, Phosphorsäure, $C_1$-$C_{10}$-Alkylphosphorsäure und Borsäure, wobei $R_1$, $R_2$ und $R_3$ die oben angegebene Bedeutung haben;
- Isethionsäure
- Gerbsäure
- Säureamide der Formel

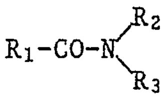

worin $R_1$ Wasserstoff oder $C_1$-$C_{12}$-Alkyl und $R_2$ und $R_3$ unabhängig voneinander Wasserstoff, $C_1$-$C_{12}$-Alkyl, $C_2$-$C_{12}$-Alkenyl, $C_1$-$C_{12}$-Hydroxyalkyl, $C_2$-$C_{12}$-Hydroxyalkenyl oder eine Polyglykoletherkette mit 1 bis 30 Gruppierungen $-CH_2$-$CH_2$-O- oder -$CHY_1$-$CHY_2$-O- bedeuten, worin von $Y_1$ und $Y_2$ einer Wasserstoff und das andere Methyl ist, wie das N-Methylacetamid;
- Harnstoffderivate der

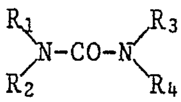

worin $R_1$, $R_2$, $R_3$ und $R_4$ unabhängig voneinander Wasserstoff, $C_1$-$C_8$-Alkyl, $C_2$-$C_8$-Alkenyl, $C_1$-$C_8$-Hydroxyalkyl oder $C_2$-$C_8$-Hydroxyalkenyl bedeuten;
- Einwertige aliphatische und monocyclische Alkohole, wie $C_2$-$C_{18}$-Alkanole, $C_2$-$C_{18}$-Alkenole und Terpenalkohole, z.B. Ethanol, Propanol, Isopropanol, Hexanol, cis-3-Hexen-1-ol, trans-2-Hexen-1-ol, 1-Octen-3-ol, Hepthanol, Octanol, trans-2-cis-6-Nonadien-1-ol, Decanol, Linalool, Geraniol, Dihydroterpineol, Myrcenol, Nopol und Terpineol;
- Aromatische Alkohole der Formel

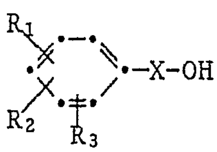

worin X $-(CH_2)_{\overline{1-6}}$, -CH=CH-$CH_2$- oder $-O-(CH_2)_{\overline{2-6}}$ und $R_1$, $R_2$ und $R_3$ unabhängig voneinander Wasserstoff, Hydroxy, Halogen oder $C_1$-$C_6$-Alkoxy bedeuten, wie z.B. Benzylalkohol, 2,4-Dichlor-benzylalkohol, Phenylethanol, Phenoxyethanol und Zimtalkohol;
- mehrwertige gegebenenfalls alkoxylierte, vorzugsweise ethoxylierte oder/und propoxylierte Alkohole sowie deren Ether und Ester der allgemeinen Formel
$R_1$-O-X-O-$R_2$
worin
$R_1$ und $R_2$ unabhängig voneinander Wasserstoff, $C_1$-$C_{12}$-Alkyl, $C_2$-$C_{12}$-Alkenyl,

$$R_3-(O\underset{R_4}{C}H-CH_2)_{\overline{1-50}},$$

worin $R_3$ für Wasserstoff $C_1$-$C_{12}$-Alkyl oder $C_2$-$C_{12}$-Alkenyl und $R_4$ für Wasserstoff oder $CH_3$- steht, und X $C_2$-$C_{10}$-Alkylen oder -Alkenylen, $-(CH_2CH_2O)_{\overline{1-50}}$ $CH_2$-$CH_2$-oder

$$-(CH_2-\underset{CH_3}{C}H-O)_{\overline{1-50}}CH_2-\underset{CH_3}{C}H-$$

bedeuten.

Die genannten Verbindungen können einzeln oder in Mischung unter sich, d.h. von der gleichen oder von verschiedenen Klassen, verwendet werden.

Die Herstellung der erfindungsgemässen mikrobiziden Zubereitungen kann in an sich bekannter Weise erfolgen, z.B. durch Lösen der Komponente a) in der Komponente h) und Zugabe der übrigen Komponenten zu der erhaltenen Lösung oder durch Lösen der Komponente a) in der Komponente f) und Zugabe zu der erhaltenen Lösung der übrigen Komponenten.

Die so erhaltenen erfindungsgemässen mikrobiziden Zubereitungen können zur Desinfektion der Haut und Hände sowie der harten Oberflächen auf diese von der Formulierung und Art der gewünschten Applikation abhängend verdünnt oder unverdünnt aufgetragen werden.

Bevorzugte erfindungsgemässe Zubereitungen enthalten
0,1 - 2,5 Gew.-% der Komponente a),
0 - 20 Gew.-% der Komponente c),
0 - 10 Gew.-% der Komponente d),
0 - 15 Gew.-% der Komponente f),
1 - 7 Gew.-% der Komponente g),
1 - 25 Gew.-% der Komponente h) und
20,5 - 97,9 Gew.-% deionisiertes Wasser.

Eine besonders bevorzugte erfindungsgemässe Zubereitung enthält als Komponente a) p-Chlor-m-xylenol und als Komponente b) 1-Phenoxy-2-propanol im Gewichtsverhältnis 1:2 bis 1:3.

Als Trübungs- bzw. perleszierende Mittel können gegebenenfalls übliche Additive, wie Ethylenglykoldistearat, -monostearat, Glycerinmonostearat und Polystyrol-Latex eingesetz werden.

Als Verdickungsmittel können Cellulose-Derivate, wie Cellulose-Ether, Fettsäurealkanolamide, Guar-Derivate, MgAl-Silikate oder Glucamate verwendet werden.

Die folgenden Beispiele erläutern die Herstellung eines erfindungsgemässen Mittels. Prozente und Teile sind Gewichtprozente bzw. Gewichtsteile.

Beispiel 1: In 5 Teile Natrium-Cumolsulfonat, in Form einer 40%igen wässrigen Lösung, werden 2,0 Teile 2,4,4′-Trichlor-2′-hydroxydiphenylether gelöst. Die klare Lösung wird auf 40°C erwärmt und unter ständigem Rühren mit 12,0 Teilen Monoethanolamin-laurylsulfat in Form einer 30%igen wässrigen Lösung, 3,0 Teilen Kokosfettsäureamidopropylbetain, 5,0 Teilen Propylenglykol, 1,0 Teilen Caprinsäure und 0,3 Teilen eines Polystyrol-Latex zur Eintrübung versetzt. Man rührt noch 10 Minuten lang und anschliessend versetzt man die Lösung mit deionisiertem Wasser bis auf total 100 Teile (36,2 Teile Wasser). Man erhält eine trübe Lösung deren pH-Wert auf 5-5,5 mit Zitronensäure oder Natronlauge eingestellt wird und die sehr gut gegen grampositive und gramnegative Bakterien, Hefen und Pilze wirksam ist.

Beispiel 2:In 5 Teile Natrium-Cumolsulfonat, in Form einer 40%igen wässrigen Lösung, werden 2,0 Teile 2,4,4′-Trichlor-2′-hydroxydiphenylether gelöst. Die klare Lösung wird auf 40°C erwärmt und unter ständigem Rühren mit 12,0 Teilen Monoethanolamin-laurylsulfat in Form einer 30%igen wässrigen Lösung, 3,0 Teilen Kokosfettsäureamidopropylbetain, 5,0 Teilen Propylenglykol, 2,0 Teilen Undecylen säure und 0,3 Teilen eines Polystyrol-Latex versetzt. Man rührt noch 10 Minuten lang und anschliessend versetzt man die Lösung mit deionisiertem Wasser bis auf total 100 Teile (35,2 Teile Wasser). Man erhält eine trübe Lösung deren pH-Wert auf 5-5,5 eingestellt wird, die sehr gut gegen grampositive und gramnegative Bakterien, Hefen und Pilzen wirksam ist. Zur Einstellung des pH-Wertes können je nach Bedarf wässrige Zitronensäure oder Natronlösungen verwendet werden.

Man verfährt wie in den Beispielen 1 und 2 beschrieben, verwendet jedoch die in der nachfolgenden Tabelle angegebenen Wirksubstanzen, und man erhält gleich gut gegen grampositive und gramnegative Bakterien, Hefen und Pilzen wirkende Zubereitungen

| Beispiel / Komponente | 3 | 4 | 5 | 6 | 7 | 8 | 9 | 10 | 11 | 12 | 13 |
|---|---|---|---|---|---|---|---|---|---|---|---|
| A | 1,0 | 1,0 | 1,0 | 1,0 | 1,0 | - | - | - | - | - | - |
| B | - | - | - | - | - | 2,0 | 2,0 | - | - | - | - |
| C | - | - | - | - | - | - | - | 1,0 | 1,0 | 1,0 | - |
| D | - | - | - | - | - | - | - | - | - | - | 4,0 |
| E | 4,0 | - | - | - | - | 4,0 | - | 6,0 | 6,0 | - | 6,0 |
| F | - | - | 3,0 | 2,0 | 2,0 | - | 2,0 | - | - | - | - |
| G | 3,0 | - | 2,0 | 6,0 | 6,0 | - | 5,0 | - | - | 2,0 | 2,0 |
| H | - | 4,0 | - | - | - | - | - | - | - | 5,0 | - |
| I | 2,5 | 2,5 | 3,0 | 4,0 | 4,0 | - | 4,0 | 2,5 | 2,5 | - | - |
| J | - | - | - | - | - | 3,0 | - | - | - | - | 3,0 |
| K | - | 2,0 | - | - | - | - | - | 1,0 | 1,0 | - | - |
| L | - | - | - | - | - | - | - | - | - | - | - |
| M | - | - | - | - | - | - | - | 5,0 | 5,0 | 8,0 | - |
| N | 5,0 | 5,0 | 5,0 | 7,5 | 10,0 | 5,0 | 5,0 | - | - | - | 8,0 |
| O | 2,5 | - | - | - | - | - | 2,5 | 2,5 | 2,5 | - | - |
| P | - | 3,0 | - | - | - | - | - | - | - | 3,0 | - |
| Q | - | - | 3,0 | 3,0 | 3,0 | - | - | - | - | - | - |
| R | 10,0 | 10,0 | 10,0 | 10,0 | 10,0 | 10,0 | 10,0 | 10,0 | - | 10,0 | 10,0 |
| ad 100 % $H_2O$ | | | | | | | | | | | |
| pH* | 5,5 | 6,5 | 9,0 | 8,2 | 8,0 | 8,0 | 9,3 | 5,5 | 5,5 | 7,0 | 7,5 |

| Beispiel / Komponente | 14 | 15 | 16 | 17 | 18 | 19 | 20 | 21 | 22 | 23 |
|---|---|---|---|---|---|---|---|---|---|---|
| A | - | - | 1,0 | 1,0 | 1,0 | 1,0 | 1,0 | 1,0 | - | - |
| B | - | - | - | - | - | 0,5 | 0,5 | - | 2,0 | 2,0 |
| C | - | - | - | - | - | 0,5 | 0,5 | - | 0,5 | 0,5 |
| D | 4,0 | 4,0 | - | - | - | - | - | - | - | - |
| E | 6,0 | - | - | 5,0 | 5,0 | 6,0 | 6,0 | - | 10,0 | 10,0 |
| F | - | 2,0 | - | - | - | - | - | - | - | - |
| G | 2,0 | - | 3,0 | 1,0 | 1,0 | 2,0 | 2,0 | - | 1,0 | 1,0 |
| H | - | 6,0 | 2,0 | - | - | - | - | - | - | - |
| I | - | 3,0 | 3,0 | - | - | 3,0 | 3,0 | - | - | - |
| J | 3,0 | - | - | 2,5 | 2,5 | - | - | 3,0 | 3,0 | 3,0 |
| K | - | - | 3,0 | - | - | - | - | - | 2,0 | 2,0 |
| L | - | - | - | - | - | - | - | 4,0 | - | - |
| M | - | - | - | 5,0 | 5,0 | - | - | - | 8,0 | 8,0 |
| N | 8,0 | 8,0 | 8,0 | 8,0 | 8,0 | 8,0 | 8,0 | 8,0 | - | - |
| O | - | 3,0 | 2,5 | - | - | 2,5 | 2,5 | 3,0 | - | - |
| P | - | - | - | - | - | - | - | - | 2,0 | 2,0 |
| Q | - | - | - | 3,0 | 3,0 | - | - | - | 2,0 | 2,0 |
| R | - | 10,0 | 10,0 | 10,0 | - | 10,0 | - | 10,0 | 10,0 | - |
| ad 100 % $H_2O$ | | | | | | | | | | |
| pH* | 7,5 | 5,5 | 6,5 | 7,8 | 5,5 | 7,0 | 7,0 | 5,0 | 8,0 | 9,0 |

A: 2,4,4'-Trichlor-2'-hydroxydiphenylether

B: o-Phenylphenol

C: p-Chlor-o-benzylphenol

D: p-Chlor-m-xylenol

E: Natrium-laurylethersulfat (2 Mol Ethylenoxid)

F: Natrium-Lauroylsarkosinat

G: Fettsäurealkylolamid-sulfonsuccinat (z.B. ®Rewopol SBL 203)

H: Natrium-sec.-alkansulfonat (z.B. ®Hostapur SAS 60)

I: Fettsäureamidoalkylbetain (z.B. ®Tego-Betain L7)

J: Natrium-cocoamphocarboxyglycinat

K: Propylenoxid/Ethylenoxid Blockpolymer mit Molgewicht 6800

L: Triethanolammonium-laurylsulfat (Na-Salz)

M: Natrium-xylolsulfonat

N: Natrium-cumolsulfonat

O: Citronensäure

P: Acetamid MEA (z.B. ®Schercomid AME)

Q: EDTA

R: Polypropylenglykol

*Der pH-Wert wurde mit Monoethanolamin eingestellt.

Beispiel 24: 1 Teil 2,4,4'-Trichlor-2'-hydroxydiphenylether wird in 10 Teilen Propylenglykol gelöst. Die klare Lösung wird mit 13,35 Teilen einer 30 %-igen wässrigen Lösung von Cocamidopropylbetain versetzt und homogen gerührt. Zu dieser Lösung werden nacheinander unter ständigem Rühren 5 Teile Na-Cumolsulfonat (pulverförmig), 50 Teile deionisiertes Wasser und 8 Teile Citronensäure Monohydrat zugegeben und homogen gerührt. Es entsteht eine homogene Suspension. Hierauf wird der pH-Wert der Suspension mit Monoethanolamin auf 5,0 eingestellt und die klare Lösung mit deionisiertem Wasser auf 100 Teile ergänzt.

Beispiel 25: 1 Teil 2,4,4'-Trichlor-2'-hydroxydiphenylether wird in 10 Teilen Propylenglykol gelöst. Die klare Lösung wird mit 6,7 Teilen einer 30 %-igen wässrigen Lösung von Cocamidopropylbetain versetzt und homogen gerührt. Zu dieser Lösung werden nacheinander unter ständigem Rühren 5 Teile Na-Cumolsulfonat (pulverförmig), 50 Teile deionisiertes Wasser und 8 Teile Citronensäure Monohydrat zugegeben und homogen gerührt. Man erhält eine homogene Suspension. Hierauf wird der pH-Wert der Suspension mit Monoethanolamin auf 5,0 eingestellt und die klare Lösung mit deionisiertem Wasser auf 100 Teile ergänzt.

Beispiel 26: 1 Teil 2,4,4'-Trichlor-2'-hydroxydiphenylether wird in 10 Teilen Propylenglykol gelöst. Die klare Lösung wird auf 50° C erwärmt und unter ständigem Rühren nacheinander mit 5 Teilen Na-Cumolsulfonat (pulverförmig), 2 Teilen eines Propylenoxid/-Ethylenoxid Blockpolymers mit einem Molekulargewicht von 6800, 60 Teilen deionisiertem Wasser und 8 Teilen Citronensäure Monohydrat versetzt und homogen gerührt. Man erhält eine homogene Suspension. Hierauf wird der pH-Wert der Suspension mit Monoethanolamin auf 5,0 eingestellt und die klare Lösung mit deionisiertem Wasser auf total 100 Teile ergänzt.

**Patentansprüche**

1. Mikrobizide Zubereitung, dadurch gekennzeichnet, dass sie
a) 0,1- 2,5 Gew.-% einer mikrobiziden Wirksubstanz,
b) 0 - 10 Gew.-% eines Aryl- oder Aryloxy-$C_2$-$C_4$-alkanols,
c) 0 - 20 Gew.-% eines anionischen Tensides,
d) 0 - 10 Gew.-% eines zwitterionischen und amphoteren Tensides,
e) 0 - 3 Gew.-% eines nichtionogenen Tensides,
f) 0 - 15 Gew.-% eines zweiwertigen Alkohols,
g) 0 - 10 Gew.-% einer $C_8$-$C_{12}$-Fettsäure,
h) 1 - 25 Gew.-% löslichkeitsverbessernder Additive
i) 4,5-98,9 Gew.-% deionisiertes Wasser
enthält.

2. Zubereitung gemäss Anspruch 1, worin als Komponente a) ein Hydroxydiphenylether der Formel

(4) 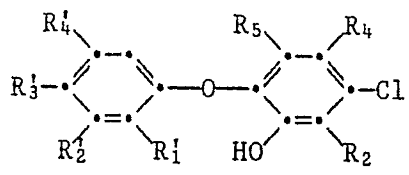

worin $R_1'$ Wasserstoff oder Hydroxy und $R_2$, $R_2'$, $R_3'$, $R_4$, $R_4'$ und $R_5$ unabhängig voneinander Wasserstoff oder Chlor bedeuten, verwendet wird.

3. Zubereitung gemäss Anspruch 1, dadurch gekennzeichnet, dass als Komponente a) eine Verbindung der Formel

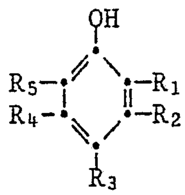

worin
$R_1$ Wasserstoff, Hydroxy, $C_{1-4}$-Alkyl, Chlor, Nitro, Phenyl oder Benzyl,
$R_2$ Wasserstoff, Hydroxy, $C_1$-$C_6$-Alkyl oder Chlor,
$R_3$ Wasserstoff, $C_1$-$C_6$-Alkyl, Hydroxy, Chlor, Nitro oder eine Sulfogruppe in Form ihrer Alkalimetall- oder Ammoniumsalze
$R_4$ Wasserstoff oder Methyl und
$R_5$ Wasserstoff oder Nitro
bedeuten, enthält.

4. Zubereitung gemäss Anspruch 1, dadurch gekennzeichnet, dass sie als Komponente a) eine Verbindung der Formel

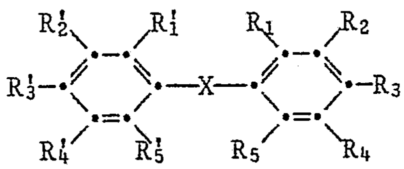

worin
X Schwefel oder die Methylengruppe,
R und $R_1'$, Hydroxy und
$R_2$, $R_2'$, $R_3$, $R_3'$, $R_4$, $R_4'$, $R_5$ und $R_5'$ unabhängig voneinander Wasserstoff oder Chlor bedeuten, enthält.

5. Zubereitung gemäss Anspurch 1, dadurch gekennzeichnet, dass sie als Komponente a) eine Verbindung der Formel

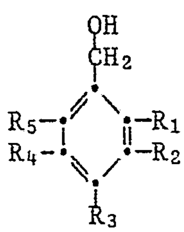

worin
$R_1$, $R_2$, $R_3$, $R_4$ und $R_5$ unabhängig voneinander Wasserstoff oder Chlor bedeuten, enthält.

6. Zubereitung gemäss Anspruch 1, dadurch gekennzeichnet, dass sie als Komponente a) Chlorhexidin enthält.

7. Zubereitung gemäss einem der Ansprüche 1 bis 6, worin als Komponente b) 2-Phenoxyethanol verwendet wird.

8. Zubereitung gemäss einem der Ansprüche 1 bis 7, worin als Komponente c) ein Alkanolaminfettsäuresulfat verwendet wird.

9. Zubereitung gemäss einem der Ansprüche 1 bis 8, worin als Komponente d) ein Fettsäureamidoalkylenbetain verwendet wird.

10. Zubereitung gemäss einem der Ansprüche 1 bis 9, worin als Komponente e) ein Fettsäuredialkanolamid verwendet wird.

11. Zubereitung gemäss einem der Ansprüche 1 bis 10, worin als Komponente f) ein $C_2$-$C_6$-Alkylenglykol verwendet wird.

12. Zubereitung gemäss einem der Ansprüche 1 bis 11, worin als Komponente g) eine gesättigte Fettsäure verwendet wird.

13. Mittel gemäss einem der Ansprüche 1 bis 12, worin als Komponente h) die Alkalimetall- oder Ammoniumsalze der Cumol-, Xylol-oder Toluolsulfonsäure verwendet werden.

14. Mittel gemäss einem der Ansprüche 1 bis 13, welches

0,1 - 2,5 Gew.-% der Komponente a),
0 - 20 Gew.-% der Komponente c),
0 - 10 Gew.-% der Komponente d),
0 - 15 Gew.-% der Komponente f),
1 - 7 Gew.-% der Komponente g),
1 - 25 Gew.-% der Komponente h) und
20,5 - 97,9 Gew.-% deionisiertes Wasser
enthält.

15. Zubereitung gemäss Anspruch 14, welches
0,1 - 2,5 Gew.-% 2,4,4'-Trichlor-2'hydroxydiphenylether als Komponente a),
2 - 20 Gew.-% Na-Monoethanolamin-laurylsulfat als Komponente c),
0 - 10 Gew.-% Kokosfettsäureamidopropylbetain als Komponente d),
0 - 15 Gew.-% Propylenglykol als Komponente f)
1 - 7 Gew.-% Caprin- oder Undecylensäure als Komponente g),
1 - 25 Gew.-% Na-Cumolsulfonat als Komponente h) und
20,5 - 92,9 Gew.-% deionisiertes Wasser.
enthält.

16. Verwendung eines Mittels gemäss einem der Ansprüche 1 bis 15 zur Haut- und Händedesinfektion.